# EUROPÄISCHE PATENTANMELDUNG

(11) **EP 1 369 671 A1**
(43) Veröffentlichungstag der Anmeldung: **10.12.2003**
(21) Anmeldenummer: 03101606.6
(22) Anmeldetag: 03.06.2003
(51) Int. Cl.: G01D 5/20, G01F 15/00

(54) **Rotor für Induktivsensoren**

(30) Priorität: 06.06.2002 DE 10225011
(71) Anmelder: Hella KG Hueck & Co., 59552 Lippstadt (DE)
(72) Erfinder: Hoppe, Steffen, 59555 Lippstadt (DE)

(57) **Zusammenfassung**

Rotor für einen Induktivsensor zum Erfassen der Drehbewegung einer in aggressiven Betriebsmedien gelagerten Welle, wobei der Rotor die folgenden Merkmale aufweist:
- einen geschlossenen metallischen Leiter (1), in welchem bei Drehung der Welle der Winkelstellung entsprechende Ströme induzierbar sind,
- einen Träger (2), welcher den metallischen Leiter (1) trägt und welcher aus einem in den Betriebsmedien geometrisch stabilem Kunststoff besteht.

## Beschreibung

Die vorliegende Erfindung betrifft einen Rotor für einen Induktivsensor zum Erfassen der Drehbewegung einer in aggressiven, insbesondere flüssigen Betriebsmedien gelagerten Welle, wobei der Rotor die folgenden Merkmale aufweist:
- einen geschlossenen metallischen Leiter, in welchem bei Drehung des Rotors der Winkelstellung entsprechende Ströme induzierbar sind,
- einen Träger, welcher den metallischen Leiter trägt.

Die Erfindung betrifft ferner eine Anordnung aus einem derartigen Rotor und einer in aggressiven, insbesondere flüssigen Betriebsmedien gelagerten Welle.

Als Träger für den geschlossenen metallischen Leiter werden derzeit bevorzugt Leiterplatten verwendet. Eine derartige Leiterplatte hat jedoch den Nachteil, dass sie, sofern sie ständig einer Flüssigkeit ausgesetzt ist, aufquillt. Das Aufquellen der Leiterplatte beeinträchtigt nicht nur die mechanischen Eigenschaften des Trägers bzw. des Rotors, sondern kann auch zu Beeinträchtigungen der elektrischen Eigenschaften, das heißt zu Ausfällen des Induktivsensors, führen. Weiterhin ist das für Leiterplatten übliche Leiterbahnmaterial Kupfer nur eingeschränkt beständig gegen aggressive Betriebsmedien.

Der Erfindung liegt daher die Aufgabe zugrunde, einen Rotor der eingangs genannten Art vorzuschlagen, bei welcher ein nicht quellender Träger verwendet wird. Ein weiteres Anliegen ist, den Rotor so auszugestalten, dass er beständig gegen aggressive Betriebsmedien ist.

Diese Aufgabe wird erfindungsgemäß dadurch gelöst, dass der Träger aus einem in den Betriebsmedien nicht quellenden Kunststoff besteht.

Der Träger kann auch ein Teil der Welle sein oder aber an der Welle befestigbar sein.

Der metallische Leiter kann ein Stanzteil sein. Gemäß der Erfindung kann dieses Stanzteil ausgestellte Laschen aufweisen, welche in Ausnehmungen des Trägers eingepresst sind. Das Stanzteil kann ebenso auf dem Träger aufgeklebt sein. Mittels ausgestellter Laschen kann das Stanzteil gemäß der Erfindung in Ausnehmungen des Trägers verrastet sein. Das Stanzteil kann ferner Haltestrukturen aufweisen, wobei der Träger ein Spritzteil ist, welches um und/oder hinter das Stanzteil gespritzt ist.

Ferner kann der metallische Leiter durch Aufbringen einer Metallschicht z. B. durch vollflächiges Sputtern mit dem Träger verbunden werden. Die metallische Leiterbahnstruktur kann auch durch Abtragen z. B. durch Ätzen einer Metallbeschichtung des Trägers auf dem Träger ausgebildet sein. Natürlich ist auch ein selektives Sputtern ein geeignetes Herstellverfahren.

Der Kunststoff, aus welchem der Träger besteht, kann erfindungsgemäß ein Polyamid sein. Der geschlossene Leiter kann gemäß der Erfindung aus Stahl oder Nickel, aber auch aus Gold, Aluminium oder andere Metallen bestehen, die von den Betriebsmedien nicht angegriffen werden, bzw. eine Schutzschicht bilden.

Sofern der Kunststoff des Trägers und der metallische Leiter einen unterschiedlichen Wärmeausdehnungskoeffizienten aufweisen, können dem Kunststoff Additive zugefügt werden, so dass ein gleicher oder nahezu gleicher Wärmeausdehnungskoeffizient erzielt wird.

Eine alternative erfindungsgemäße Lösung besteht darin, der geschlossene Leiter gemäß Anspruch 11 in einem Bereich vorzugsweise einem stirnseitigen Ende der Welle eingearbeitet, insbesondere eingefräst ist.

Ein Ausführungsbeispiel ist anhand der Zeichnung näher beschrieben. Darin zeigt
- Fig. 1: einen metallischen Leiter,
- Fig. 2: einen Rotor aus Träger und metallischem Leiter in der Vorderansicht und
- Fig. 3: den Rotor gemäß Fig. 2 in der Rückansicht.

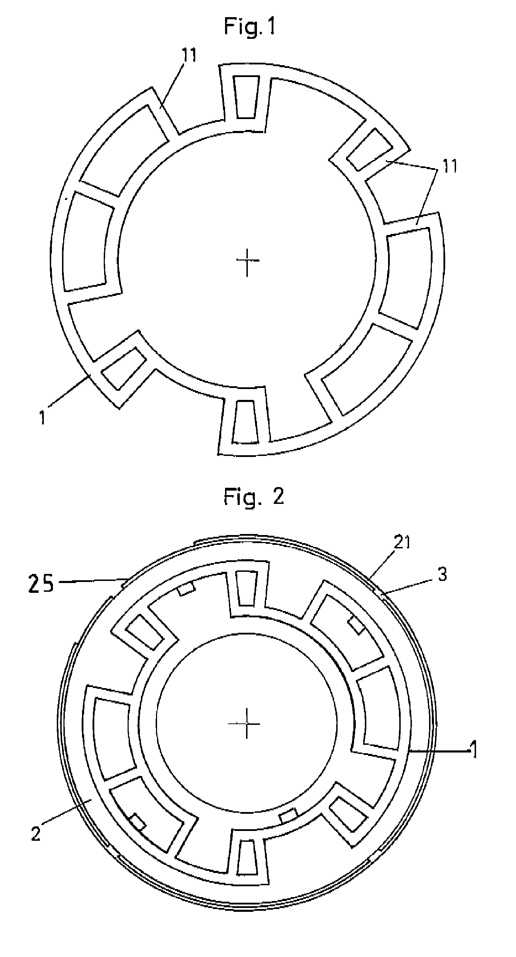

Der in Fig. 1 abgebildete metallische Leiter wird im wesentlichen aus zwei zentrischen Ringen gebildet, die über Stege 11 miteinander verbunden sind. Sowohl der innere als auch der äußere Ring weisen dabei Unterbrechungen auf. Ein derartiger metallischer Leiter ist aus dem Stand der Technik bekannt und wird bereits in Induktivsensoren eingesetzt.

In Fig. 2 ist ein Rotor eines Induktivsensors dargestellt, der einen Träger 2 aufweist, welcher ringförmig ausgebildet ist und auf welchem ein metallischer Leiter 1 gemäß Fig. 1 befestigt ist. Zur Befestigung des metallischen Leiters 1 an dem Träger 2 weist der metallischen Leiter 1 ausgestellten Laschen auf, welche in den Abmessungen der Laschen entsprechen den Durchbrüchen 23 eingepresst sind. Die ausgestellten Laschen haben dabei im Querschnitt tannenbaumähnliche Haltestrukturen, durch welche nach Einpressen der ausgestellten Laschen in die Durchbrüche 23 eine unlösbare Verbindung zwischen dem Träger 2 und dem metallischen Leiter 1 hergestellt wird.

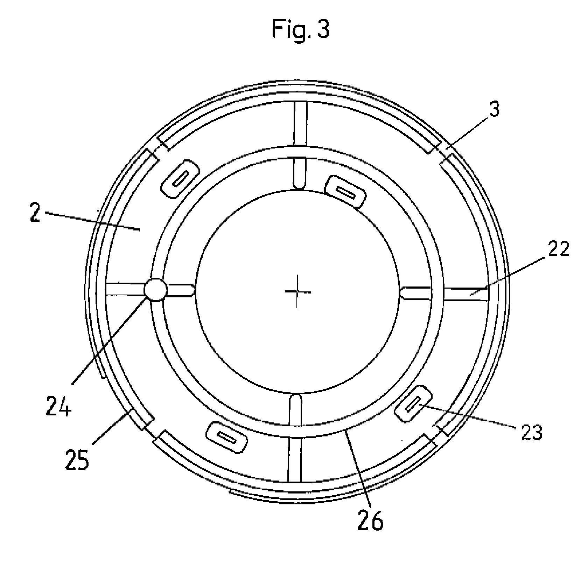

Die Durchbrüche 23 weisen auf der in der Fig. 3 dargestellten Rückseite des Rotors 2 Verstärkungen auf, welche ein Einreißen oder Aufbrechen in der Kanten der Durchbrüche verhindern und durch ihre Länge eine Verbesserung der mechanischen Verbindung erzielen. Ferner ist der Rotor mit einer kreisförmigen und mit radialen Verstärkungen 22, 26 versehen, um dem Rotor eine höhere Stabilität zu geben. An der Rückseite des Trägers 2 ist ferner an der äußeren umlaufenden Kante des Trägers 2 ein umlaufender Bund 25 angebracht. Dieser umlaufende Bund weist Ausnehmungen auf, so dass der Bund 25 in zum Beispiel vier gleichartige Bundsegmente eingeteilt ist. Der Bund ist im Querschnitt im wesentlichen T-förmig, d.h. am freien Ende des Bundes weist der Bund radial überkragende Enden auf. Mittels der inneren Enden kann der Träger 2 auf das Ende einer Welle aufgeklippst werden. Um den Träger 2 kann dann zur Sicherung des Trägers 2 bzw. des Rotors an der Welle ein Sprengring um den Rotor gelegt werden, welcher das radial nach außen weisende Ende des Bundes 25 hintergreift und die einzelnen Segmente des Bundes 25 nach Innen biegt und so ein Abrutschen des Rotors von der Welle verhindert.

Ein auf der Rückseite des Trägers 2 angebrachter erhabener Positionierstift 24 dient dazu, den Rotor drehfest in einer definierten Position an der Welle festlegen zu können.

## Patentansprüche

1. Rotor für einen Induktivsensor zum Erfassen der Drehbewegung einer in aggressiven Betriebsmedien gelagerten Welle, wobei der Rotor die folgenden Merkmale aufweist:
- einen geschlossenen metallischen Leiter (1), in welchem bei Drehung der Welle der Winkelstellung entsprechende Ströme induzierbar sind,
- einen Träger (2), welcher den metallischen Leiter (1) trägt und welcher aus einem in den Betriebsmedien geometrisch stabilem Kunststoff besteht.

2. Rotor nach Anspruch 1 oder 11, **dadurch gekennzeichnet, dass** der Träger (2) Teil der Welle ist.

3. Rotor nach Anspruch 1, **dadurch gekennzeichnet, dass** der Träger (2) an der Welle befestigt ist.

4. Rotor nach einem der Ansprüche 1 bis 3, **dadurch gekennzeichnet, dass** der metallische Leiter (1) ein Stanzteil ist.

5. Rotor nach Anspruch 4, **dadurch gekennzeichnet, dass** das Stanzteil (1) ausgestellte Laschen (11) aufweist, welche in Ausnehmungen (23) des Trägers (2) eingepresst sind.

6. Rotor nach Anspruch 4, **dadurch gekennzeichnet, dass** das Stanzteil (1) auf dem Träger (2) aufgeklebt ist.

7. Rotor nach Anspruch 4, **dadurch gekennzeichnet, dass** das Stanzteil (1) ausgestellte Laschen aufweist, welche in Ausnehmungen des Trägers (2) verrastet sind.

8. Rotor nach Anspruch 4, **dadurch gekennzeichnet, dass** das Stanzteil (1) Haltestrukturen aufweist und dass der Träger (2) ein Spritzteil ist, welches um und/oder hinter das Stanzteil gespritzt ist.

9. Rotor nach einem der Ansprüche 1 bis 3, **dadurch gekennzeichnet, dass** der metallische Leiter (1) durch Aufbringen einer Metallschicht z. B. Sputtern mit dem Träger (2) verbunden ist.

10. Rotor nach einem der Ansprüche 1 bis 9, **dadurch gekennzeichnet, dass** der metallische Leiter (1) durch Abtragen z. B. Ätzen einer Metallbeschichtung des Trägers (2) auf dem Träger (2) aufgebracht ist.

11. Rotor für einen Induktivsensor zum Erfassen der Drehbewegung einer in aggressiven Betriebsmedien gelagerten Welle, wobei der Rotor ein geschlossenen metallischen Leiter aufweist, wobei der Leiter in einem Bereich der Welle eingearbeitet, insbesondere gefräst ist.

12. Anordnung aus einem Rotor (2) und einer in aggressiven Betriebsmedien gelagerter Wellen, wobei der Rotor (2) einen geschlossenen metallischen Leiter (1), in welchem bei Drehung der Welle der Winkelstellung entsprechende Ströme induzierbar sind, und einen Träger (2) aufweist, welcher den Leiter (1) trägt, **dadurch gekennzeichnet, dass** der Träger (1) aus einem nicht in der Flüssigkeit quellenden Kunststoff besteht.
